# EUROPÄISCHE PATENTSCHRIFT

(11) **EP 4 043 616 B1**
(45) Veröffentlichungstag und Bekanntmachung des Hinweises auf die Patenterteilung: **19.07.2023**
(21) Anmeldenummer: 21156496.8
(22) Anmeldetag: 11.02.2021
(51) Int. Cl.: C25B 3/07, C25B 3/25, C25B 9/21, C25B 13/07, B01D 61/00, C07C 31/30

(54) **VERFAHREN ZUR HERSTELLUNG VON ALKALIMETALLALKOHOLATEN IN EINER DREIKAMMERELEKTROLYSEZELLE**
METHOD FOR PRODUCING ALKALINE METAL ALCOHOLATES IN A THREE-CHAMBER ELECTROLYSIS CELL
PROCÉDÉ DE PRODUCTION D'ALCOOLIQUES MÉTALLIQUES ALCALINS DANS UNE CELLULE D'ÉLECTROLYSE À TROIS CHAMBRES

(43) Veröffentlichungstag der Anmeldung: 17.08.2022
(73) Patentinhaber: Evonik Operations GmbH, 45128 Essen (DE)
(72) Erfinder: REINSBERG, Philip Heinrich, 53227 Bonn (DE); HORN, Michael, 53859 Niederkassel (DE)
(74) Vertreter: Evonik Patent Association

(56) Entgegenhaltungen:
- EP-A1- 0 776 995
- US-A- 5 425 856
- US-A1- 2008 173 551
- US-A1- 2009 090 638

## Beschreibung

Die vorliegende Erfindung betrifft ein Verfahren zur elektrochemischen Herstellung einer Alkalimetallalkoholatlösung. Das Verfahren wird in einer Elektrolysezelle durchgeführt, welche drei Kammern aufweist, wobei die mittlere Kammer durch einen für Kationen durchlässigen Festelektrolyten, beispielsweise NaSICON, von der Kathodenkammer und durch eine Diffusionsbarriere, beispielsweise einer für Kationen oder Anionen selektiven Membran, von der Anodenkammer abgetrennt ist. Das erfindungsgemäße Verfahren löst das Problem, dass sich während der Elektrolyse ein Konzentrationsgradient in der Mittelkammer der Elektrolysezelle bildet, der zu lokal erniedrigten pH-Werten und damit zu einer Schädigung des verwendeten Festelektrolyten führt. Dies wird dadurch verhindert, dass während der Elektrolyse ein Gas in die Mittelkammer eingeleitet wird, wodurch es zu einer besseren Vermischung der Elektrolytlösung in der Mittelkammer kommt und so die Ausbildung des Konzentrationsgradienten verhindert wird.

### 1. Hintergrund der Erfindung

Die elektrochemische Herstellung von Alkalimetallalkoholatlösungen ist ein wichtiger industrieller Prozess, der beispielsweise in der DE 103 60 758 A1, der US 2006/0226022 A1 und der WO 2005/059205 A1 beschrieben ist. Das Prinzip dieser Verfahren ist eine Elektrolysezelle, in deren Anodenkammer sich die Lösung eines Alkalisalzes, beispielsweise Kochsalz oder NaOH, und in deren Kathodenkammer sich der betreffende Alkohol oder eine niedrig konzentrierte alkoholische Lösung des betreffenden Alkalialkoholates, beispielsweise Natriummethanolat oder Natriumethanolat, befinden. Die Kathodenkammer und die Anodenkammer sind durch eine das eingesetzte Alkalimetallion leitende Keramik getrennt, beispielsweise NaSICON oder dessen Analoga für Kalium oder Lithium. Bei Anlegen eines Stroms entstehen an der Anode, wenn ein Chloridsalz des Alkalimetalls eingesetzt wird, Chlor und an der Kathode Wasserstoff und Alkoholationen. Der Ladungsausgleich resultiert dadurch, dass Alkalimetallionen aus der Mittelkammer in die Kathodenkammer über die für sie selektive Keramik wandern. Der Ladungsausgleich zwischen Mittelkammer und Anodenkammer resultiert aus der Wanderung von Kationen bei Einsatz von Kationenaustauschermembranen oder der Wanderung von Anionen bei Einsatz von Anionenaustauschermembranen oder durch Wanderung beider lonenarten bei Einsatz nichtspezifischer Diffusionsbarrieren. Dadurch erhöht sich die Konzentration des Alkalialkoholats in der Kathodenkammer und es erniedrigt sich die Konzentration der Natriumionen im Anolyten.

NaSICON-Festelektrolyte werden auch bei der elektrochemischen Herstellung anderer Verbindungen eingesetzt:
WO 2014/008410 A1 beschreibt ein elektrolytisches Verfahren zur Herstellung von elementarem Titan oder Seltenen Erden. Dieses Verfahren beruht darauf, dass Titanchlorid aus TiOz und der entsprechenden Säure gebildet wird, dieses mit Natriumalkoholat zum Titaniumalkoholat und NaCl reagiert und schließlich elektrolytisch zu elementarem Titan und Natriumalkoholat umgesetzt wird.
WO 2007/082092 A2 und WO 2009/059315 A1 beschreiben Verfahren zur Herstellung von Biodiesel, in denen mithilfe von über NaSICON elektrolytisch hergestellten Alkoholaten zunächst Triglyceride in die entsprechenden Alkalimetalltriglyceride überführt werden und in einem zweiten Schritt mit elektrolytisch erzeugten Protonen zu Glycerin und dem jeweiligen Alkalimetallhydroxid umgesetzt werden.

Im Stand der Technik sind demnach Verfahren beschrieben, die in Elektrolysezellen mit einer ionendurchlässigen Schicht durchgeführt werden, wie zum Beispiel NaSiCON-Festelektrolyten. Diese Festelektrolyten weisen allerdings typischerweise den Nachteil auf, dass sie nicht gegenüber wässrigen Säuren langzeitstabil sind. Dies ist insofern problematisch, als während der Elektrolyse in der Anodenkammer der pH durch Oxidationsprozesse sinkt (zum Beispiel bei Herstellung von Halogenen durch Disproportionierung oder durch Sauerstoffbildung). Diese sauren Bedingungen greifen den NaSICON-Festelektrolyten an, so dass das Verfahren nicht großtechnisch eingesetzt werden kann. Um diesem Problem zu begegnen, wurden im Stand der Technik verschiedene Ansätze beschrieben.

So wurden im Stand der Technik Dreikammerzellen vorgeschlagen. Solche sind auf dem Gebiet der Elektrodialyse bekannt, zum Beispiel US 6,221,225 B1.

WO 2012/048032 A2 und US 2010/0044242 A1 beschreiben beispielsweise elektrochemische Verfahren zur Herstellung von Natriumhypochlorit und ähnlicher Chlorverbindungen in einer solchen Dreikammerzelle. Die Kathodenkammer und die mittlere Kammer der Zelle werden dabei durch einen für Kationen durchlässigen Festelektrolyten, wie zum Beispiel NaSICON, getrennt. Um diesen vor dem sauren Anolyten zu schützen, wird der Mittelkammer beispielsweise Lösung aus der Kathodenkammer zugeführt. Die US 2010/0044242 A1 beschreibt außerdem in Abbildung 6, dass Lösung aus der mittleren Kammer mit Lösung aus der Anodenkammer außerhalb der Kammer vermischt werden kann, um Natriumhypochlorit zu erhalten.

Auch für die Herstellung oder Reinigung von Alkalialkoholaten wurden solche Zellen im Stand der Technik vorgeschlagen.

So beschreibt die US 5,389,211 A ein Verfahren zur Reinigung von Alkoholatlösungen, in denen eine Dreikammerzelle eingesetzt wird, in welcher die Kammern durch kationenselektive Festelektrolyten oder auch nichtionische Trennwände voneinander abgegrenzt sind. Die Mittelkammer wird als Pufferkammer eingesetzt, um zu verhindern, dass sich die gereinigte Alkoxid- oder Hydroxidlösung aus der Kathodenkammer mit der verunreinigten Lösung aus der Anodenkammer mischt.

Die US 5,389,211 beschreibt die Nutzung einer Dreikammerzelle zur Reinigung von organischen oder anorganischen Hydroxiden bzw. Alkoxiden.

Die DE 42 33 191 A1 beschreibt die elektrolytische Gewinnung von Alkoholaten aus Salzen und Alkoholaten in Mehrkammerzellen und Stapeln aus mehreren Zellen.

Die WO 2008/076327 A1 beschreibt ein Verfahren zur Herstellung von Alkalimetallalkoholaten. Dabei wird eine Dreikammerzelle eingesetzt, deren Mittelkammer mit Akalimetallalkoholat gefüllt ist (siehe zum Beispiel Absätze [0008] und [0067] der WO 2008/076327 A1). Dadurch wird der die Mittelkammer und die Kathodenkammer abtrennende Festelektrolyt vor der in der Anodenkammer befindlichen Lösung, die bei der Elektrolyse saurer wird, geschützt. Eine ähnliche Anordnung beschreibt die WO 2009/073062 A1. Diese Verfahren haben allerdings den Nachteil, dass es sich bei Alkalimetallalkoholatlösung um das gewünschte Produkt handelt, was aber als Pufferlösung verbraucht und kontinuierlich kontaminiert wird. Ein weiterer Nachteil des in der WO 2008/076327 A1 beschriebenen Verfahrens ist, dass die Bildung des Alkoholats in der Kathodenkammer von der Diffusionsgeschwindigkeit der Alkalimetallionen durch zwei Membranen bzw. Festelektrolyten abhängt. Dies führt wiederum zu einer Verlangsamung der Bildung des Alkoholats.

Ein weiteres Problem ergibt sich durch die Geometrie der Dreikammerzelle. Die Mittelkammer ist in einer solchen durch eine Diffusionsbarriere von der Anodenkammer und durch eine ionenleitende Keramik von der Kathodenkammer abgetrennt. Während der Elektrolyse kommt es damit unvermeidlich zur Ausbildung von pH-Gradienten und zu Totvolumina. Dies kann die ionenleitende Keramik schädigen und infolgedessen des Spannungsbedarf der Elektrolyse erhöhen und/oder zum Bruch der Keramik führen.

Während dieser Effekt in der gesamten Elektrolysekammer stattfindet, ist er besonders kritisch in der Mittelkammer, da diese von der ionenleitenden Keramik begrenzt wird. An der Anode und der Kathode werden üblicherweise Gase gebildet, sodass es in diesen Kammern zumindest bis zu einem gewissen Grad zur Durchmischung kommt. Der genannte unerwünschte Effekt verstärkt sich dadurch, dass die Sole im Allgemeinen relativ langsam durch die Elektrolysezelle gepumpt wird.

Aufgabe der vorliegenden Erfindung war deshalb, ein verbessertes Verfahren zur elektrolytischen Herstellung von Alkalimetallalkoholat bereitzustellen, welches einen Schutz des kationenleitenden Festelektrolyten vor Säure gewährleistet, aber die vorgenannten Nachteile nicht aufweist. Daneben soll sich das Verfahren durch einen gegenüber dem Stand der Technik sparsameren Einsatz der Edukte auszeichnen.

### 2. Kurzbeschreibung der Erfindung

Es wurde nun überraschend ein Verfahren gefunden, welches die erfindungsgemäße Aufgabe löst. Das erfindungsgemäße Verfahren ist eines zur Herstellung einer Lösung L₁ <115> eines Alkalimetallalkoholats XOR im Alkohol ROH in einer Elektrolysezelle **E** <100>,
wobei **E** <100> mindestens eine Anodenkammer **K_{A}** <101>, mindestens eine Kathodenkammer **K_{K}** <102> und mindestens eine dazwischen liegende Mittelkammer **K_{M}** <103> umfasst,
wobei **K_{A}** <101 > eine anodische Elektrode **E_{A}** <104> und einen Ablauf **A_{KA}** <106> umfasst,
wobei **K_{K}** <102> eine kathodische Elektrode **E_{K}** <105>, einen Zulauf **Z_{KK}** <107> und einen Ablauf **A_{KK}** <109> umfasst,
wobei **K_{M}** <103> einen Zulauf **Z_{KM}** <108>, einen Gaseinlass G_{E} <122> und einen Gasauslass **G_{A}** <120> umfasst, durch eine Diffusionsbarriere **D** <110> von **K_{A}** <101> abgetrennt ist und durch einen alkalikationenleitenden Festelektrolyten **F_{K}** <111> von **K_{K}** <102> abgetrennt ist,
wobei **K_{M}** <103> und **K_{A}** <101 > durch eine Verbindung **V_{AM}** <112> miteinander verbunden sind, durch welche Flüssigkeit aus **K_{M}** <103> in **K_{A}** <101> geleitet werden kann,
wobei das Verfahren die folgenden, gleichzeitig ablaufenden Schritte (a), (b), (c) und (d) umfasst:
   (a) ein Lösung **L₂** <113> umfassend den Alkohol ROH und bevorzugt umfassend mindestens ein Alkalimetallalkoholat XOR wird durch **K_{K}** <102> geleitet,
   (b) eine neutrale oder alkalische, wässrige Lösung **L₃** <114> eines Salzes **S** umfassend X als Kation wird durch **K_{M},** dann über **V_{AM},** dann durch **K_{A}** <101 > geleitet,
   (c) zwischen **E_{A}** <104> und **E_{K}** <105> wird Spannung angelegt,
   (d) ein Gas **I** <121> wird über den Gaseinlass **G_{E}** <122> in die Lösung **L₃** <114> in der Mittelkammer **K_{M}** <103> geleitet, und über den Gasauslass **G_{A}** <120> aus der Mittelkammer **K_{M}** <103> abgeführt,
wodurch am Ablauf **A_{KK}** <109> die Lösung **L₁** <115> erhalten wird, wobei die Konzentration von XOR in **L₁** <115> höher ist als in **L₂** <113>,
und wodurch am Ablauf **A_{KA}** <106> eine wässrige Lösung **L₄** <116> von **S** erhalten wird, wobei die Konzentration von **S** in **L₄** <116> geringer ist als in **L₃** <114>,
wobei X ein Alkalimetallkation ist und Rein Alkylrest mit 1 bis 4 Kohlenstoffatomen ist.

### 3. Abbildungen

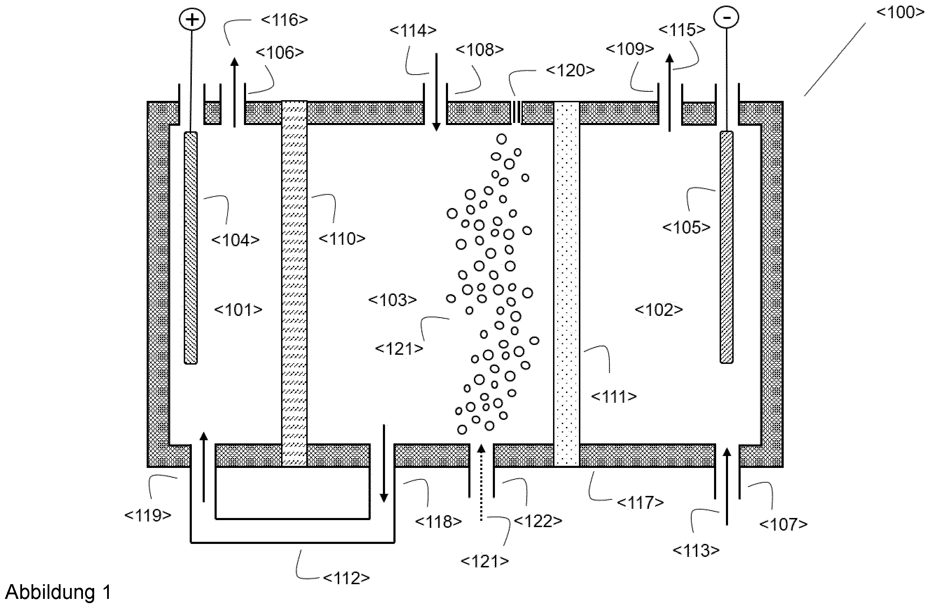

Abbildung 1 zeigt das erfindungsgemäße Verfahren anhand einer Dreikammerzelle **E** <100> umfassend eine Kathodenkammer **K_{K}** <102>, eine Anodenkammer **K_{A}** <101> und eine dazwischen liegende Mittelkammer **K_{M}** <103>. Die drei Kammern werden von einer Außenwand <117> der Dreikammerzelle **E** <100> begrenzt. Die Kathodenkammer **K_{K}** <102> ist außerdem durch einen für Natriumionen selektiv permeablen NaSICON-Festelektrolyten **F_{K}** <111> von der Mittelkammer **K_{M}** <103> abgetrennt. Die Mittelkammer **K_{M}** <103> ist zusätzlich wiederum durch eine Diffusionsbarriere **D** <110> von der Anodenkammer **K_{A}** <101 > abgetrennt. Der NaSICON-Festelektrolyt **F_{K}** <111> und die Diffusionsbarriere **D** <110> erstrecken sich über die gesamte Tiefe und Höhe der Dreikammerzelle **E** <100>.

Durch die Kathodenkammer **K_{K}** <102> wird eine Lösung von Natriummethanolat in Methanol **L₂** <113> geleitet. Eine wässrige Lösung von Natriumchlorid **L₃** <114> mit pH 10.5 wird über den Zulauf **Z_{KM}** <108> gleichgerichtet mit der Schwerkraft in die Mittelkammer **K_{M}** <103> gegeben. Durch die Verbindung **V_{AM}** <112>, die zwischen einem Ablauf **A_{KM}** <118> der Mittelkammer **K_{M}** <103> und einem Zulauf **Z_{KA}** <119> der Anodenkammer **K_{A}** <101 > ausgebildet ist, ist die Mittelkammer **K_{M}** <103> mit der Anodenkammer **K_{A}** <101 > verbunden. Natriumchloridlösung **L₃** <114> wird durch diese Verbindung **V_{AM}** <112> von der Mittelkammer **K_{M}** <103> in die Anodenkammer **K_{A}** <101 > geleitet. Beim Anlegen einer Spannung wird in der Kathodenkammer **K_{K}** <102> Methanol zu Methanolat und H₂ reduziert. Natriumionen diffundieren dabei von der Mittelkammer **K_{M}** <103> durch den NaSICON-Festelektrolyten **F_{K}** <111> in die Kathodenkammer **K_{K}** <102>. Insgesamt erhöht sich dadurch die Konzentration von Natriummethanolat in der Kathodenkammer **K_{K}** <102>, wodurch eine methanolische Lösung von Natriummethanolat **L₁** <115> erhalten wird, deren Konzentration von Natriummethanolat gegenüber **L₂** <113> erhöht ist. In der Anodenkammer **K_{A}** <101 > werden Chloridionen aus **L₃** <114> zu Clz oxidiert.

Clz reagiert in wässriger Lösung sauer. Aufgrund der Geometrie der Dreikammerzelle **E** <100> und der Führung der wässrigen Lösung **L₃** <114> wird der säureempfindliche NaSICON-Festelektrolyt <111> vor der gegenüber **L₃** <114> erhöhten Acidität der in der Anodenkammer **K_{A}** <101> resultierenden Lösung **L₄** <116> geschützt.

Am Boden der Dreikammerzelle **E** <100> befindet sich ein Gaseinlass **G_{E}** <122>, durch den Druckluft als Gas **I** <121> in die Lösung **L₃** <114> in der Mittelkammer **K_{M}** <103> geleitet wird. Dadurch kommt es zu Verwirbelungen und Turbulenzen in der Lösung **L₃** <114>, durch die ein sich in der Mittelkammer **K_{M}** <103> mit Fortgang der Elektrolyse aufbauender, die Elektrolyse erschwerender, pH-Gradient zerstört wird. Die Druckluft wird über den Gasauslass **G_{A}** <120> aus der Mittelkammer **K_{M}** <103> abgeführt.

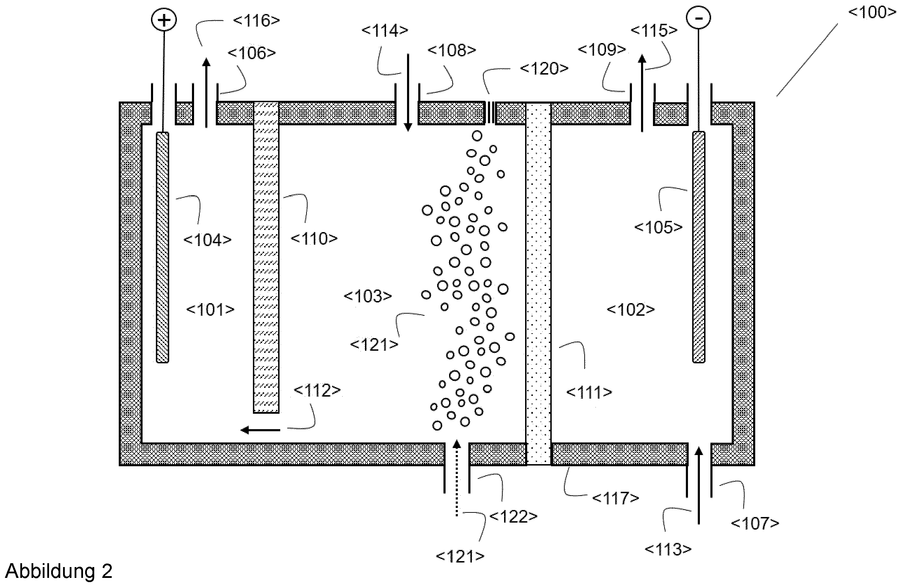

Abbildung 2 zeigt eine Ausführungsform des erfindungsgemäßen Verfahrens, die der in Abbildung 1 dargestellten entspricht. Der einzige Unterschied ist dabei, dass die Verbindung **V_{AM}** <112> von der Mittelkammer **K_{M}** <103> in die Anodenkammer **K_{A}** <101 > durch eine Perforation in der Diffusionsbarriere **D** <110> gebildet wird.

### 4. Detaillierte Beschreibung der Erfindung

### 4.1 Elektrolysezelle E

Das erfindungsgemäße Verfahren wird in einer Elektrolysezelle **E,** die mindestens eine Anodenkammer **K_{A},** mindestens eine Kathodenkammer **K_{K}** und mindestens eine dazwischen liegende Mittelkammer **K_{M}** umfasst, durchgeführt. Dies umfasst auch Elektrolysezellen **E,** welche mehr als eine Anodenkammer **K_{A}** und/oder Kathodenkammer **K_{K}** und/oder Mittelkammer **K_{M}** aufweisen. Solche Elektrolysezellen, in denen diese Kammern modulartig aneinandergefügt werden, sind beispielsweise in der DD 258 143 A3 und der US 2006/0226022 A1 beschrieben.

Die Anodenkammer **K_{A}** umfasst eine anodische Elektrode **E_{A}.** Als solche anodische Elektrode **E_{A}** kommt jede dem Fachmann geläufige Elektrode in Frage, die unter den Bedingungen des erfindungsgemäßen Verfahrens stabil ist. Solche sind insbesondere in WO 2014/008410 A1, Absatz [024] oder DE 10360758 A1, Absatz [031] beschrieben. Diese Elektrode E_{A} kann aus einer Schicht bestehen oder aus mehreren planen, zueinander parallelen Schichten bestehen, die jeweils perforiert oder expandiert sein können. Die anodische Elektrode **E_{A}** umfasst insbesondere ein Material, welches ausgewählt ist aus der Gruppe bestehend aus Rutheniumoxid, Iridiumoxid, Nickel, Kobalt, Nickelwolframat, Nickeltitanat, Edelmetalle wie insbesondere Platin, welches auf einem Träger wie Titan oder Kovar ^{®} (einer Eisen/Nickel/Kobalt-Legierung, in denen die einzelnen Anteile bevorzugt wie folgt sind: 54 Massen-% Eisen, 29 Massen-% Nickel, 17 Massen-% Cobalt) geträgert ist. Weitere mögliche Anodenmaterialien sind insbesondere Edelstahl, Blei, Graphit, Wolframcarbid, Titandiborid. Bevorzugt umfasst **E_{A}** eine mit Rutheniumoxid/Iridiumoxid beschichtete Titananode (RuO₂+ IrO₂ / Ti).

Die Kathodenkammer **K_{K}** umfasst eine kathodische Elektrode **E_{K}.** Als solche kathodische Elektrode **E_{K}** kommt jede dem Fachmann geläufige Elektrode in Frage, die unter den Bedingungen stabil ist. Solche sind insbesondere in WO 2014/008410 A1, Absatz [025] oder DE 10360758 A1, Absatz [030] beschrieben. Diese Elektrode **E_{K}** kann aus der Gruppe bestehend aus Maschenwolle, dreidimensionale Matrixstruktur oder als "Kugeln" ausgewählt sein. Die kathodische Elektrode **E_{K}** umfasst insbesondere ein Material, welches ausgewählt ist aus der Gruppe bestehend aus Stahl, Nickel, Kupfer, Platin, platinierte Metalle, Palladium, auf Kohle geträgertes Palladium, Titan. Bevorzugt umfasst **E_{K}** Nickel.

Die mindestens eine Mittelkammer **K_{M}** befindet sich zwischen der Anodenkammer **K_{A}** und der Kathodenkammer **K_{K}.**

Die Elektrolysezelle **E** weist üblicherweise eine Außenwand **W_{A}** auf. Die Außenwand **W_{A}** ist insbesondere aus einem Material, welches aus der Gruppe bestehend aus Stahl, bevorzugt gummierter Stahl, Kunststoff, der insbesondere aus Telene ^{®} (duroplastisches Polydicyclopentadien), PVC (Polyvinylchlorid), PVC-C (nachchloriertes Polyvinylchlorid), PVDF (Polyvinylidenfluorid) ausgewählt ist. **W_{A}** kann insbesondere für Zuläufe und Abläufe durchbrochen sein. Innerhalb von **W_{A}** liegen dann die mindestens eine Anodenkammer **K_{A},** die mindestens eine Kathodenkammer **K_{K}** und die mindestens eine dazwischen liegende Mittelkammer **K_{M}.**

**K_{M}** ist durch eine Diffusionsbarriere **D** von **K_{A}** abgetrennt und durch einen alkalikationenleitenden Festelektrolyten **F_{K}** von **K_{K}** abgetrennt.

Als Diffusionsbarriere **D** kann jedes Material genutzt werden, welches unter den Bedingungen des erfindungsgemäßen Verfahrens stabil ist und den Übergang von Protonen von der in der Anodenkammer **K_{A}** befindliche Flüssigkeit in die Mittelkammer **K_{M}** verhindert oder verlangsamt.

Als Diffusionsbarriere **D** wird insbesondere eine nicht ionenspezifische Trennwand oder eine für spezifische Ionen durchlässige Membran verwendet. Bevorzugt handelt es sich bei der Diffusionsbarriere **D** um eine nicht ionenspezifische Trennwand.

Das Material für die nichtionenspezifische Trennwand ist insbesondere aus der Gruppe bestehend aus Gewebe, wobei es sich insbesondere um textiles Gewebe oder Metallgewebe handelt, Glas, wobei es sich insbesondere um gesintertes Glas oder Glasfritten handelt, Keramik, insbesondere keramische Fritten, Membrandiaphragmas ausgewählt.

Handelt es sich bei der Diffusionsbarriere **D** um eine "für spezifische Ionen durchlässige Membran", so bedeutet dies erfindungsgemäß, dass die jeweilige Membran die Diffusion bestimmter Ionen durch sie hindurch gegenüber anderen begünstigt. Insbesondere sind damit Membranen gemeint, die die Diffusion durch sie hindurch von Ionen einer bestimmten Ladungsart gegenüber entgegengesetzt geladenen Ionen begünstigt. Noch bevorzugter begünstigen für spezifische Ionen durchlässige Membranen außerdem die Diffusion bestimmter Ionen mit einer Ladungsart gegenüber anderen Ionen derselben Ladungsart durch sie hindurch.

Anionenleitende Membranen sind erfindungsgemäß solche, die selektiv Anionen, bevorzugt selektiv bestimmte Anionen leiten. In anderen Worten begünstigen sie die Diffusion von Anionen durch sie hindurch gegenüber der von Kationen, insbesondere gegenüber Protonen, noch bevorzugter begünstigen sie zusätzlich die Diffusion von bestimmten Anionen durch sie hindurch gegenüber der Diffusion anderer Anionen durch sie hindurch.

Kationenleitende Membranen sind erfindungsgemäß solche, die selektiv Kationen, bevorzugt selektiv bestimmte Kationen leiten. In anderen Worten begünstigen sie die Diffusion von Kationen durch sie hindurch gegenüber der von Anionen, noch bevorzugter begünstigen sie die Diffusion von bestimmten Kationen, durch sie hindurch gegenüber der Diffusion anderer Kationen durch sie hindurch, noch viel mehr bevorzugter von Kationen, bei denen es sich nicht um Protonen handelt, noch bevorzugter um Natriumkationen handelt, gegenüber Protonen.

"Begünstigen die Diffusion bestimmter Ionen X gegenüber der Diffusion anderer Ionen Y" bedeutet insbesondere, dass der Diffusionskoeffizient (Einheit m²/s) der lonenart X bei einer gegebenen Temperatur für die betreffende Membran um den Faktor 10, bevorzugt 100, bevorzugt 1000 höher ist als der Diffusionskoeffizient der lonenart Y für die betreffende Membran.

Handelt es sich bei der Diffusionsbarriere **D** um eine "für spezifische Ionen durchlässige Membran", so ist es bevorzugt eine anionenleitende Membran, denn diese verhindert besonders gut die Diffusion von Protonen aus der Anodenkammer **K_{A}** in die Mittelkammer **K_{M}.**

Als anionenleitende Membran wird insbesondere eine solche eingesetzt, die für die vom Salz **S** umfassten Anionen selektiv sind. Solche Membranen sind dem Fachmann bekannt und können von ihm eingesetzt werden.

Salz **S** ist bevorzugt ein Halogenid, Sulfat, Sulfit, Nitrat, Hydrogencarbonat oder Carbonat von X, noch bevorzugter ein Halogenid.

Halogenide sind Fluoride, Chloride, Bromide, Jodide. Das bevorzugteste Halogenid ist Chlorid.

Bevorzugt wird als anionenleitende Membran eine für Halogenide, bevorzugter Chlorid, selektive Membran eingesetzt.

Anionenleitende Membranen sind beispielsweise beschrieben von M.A. Hickner, A.M. Herring, E.B. Coughlin, Journal of Polymer Science, Part B: Polymer Physics 2013, 51, 1727-1735 und C.G. Arges, V. Ramani, P.N. Pintauro, Electrochemical Society Interface 2010, 19, 31-35, WO 2007/048712 A2 sowie auf Seite 181 des Lehrbuchs von Volkmar M. Schmidt Elektrochemische Verfahrenstechnik: Grundlagen, Reaktionstechnik, Prozessoptimierung, 1. Auflage (8. Oktober 2003).

Noch bevorzugter werden demnach als anionenleitende Membran organische Polymere, welche insbesondere aus Polyethylen, Polybenzimidazolen, Polyetherketonen, Polystyrol, Polypropylen oder fluorierten Membranen wie Polyperfluorethylen, bevorzugt Polystyrol, ausgewählt sind, eingesetzt, wobei diese kovalent gebunden funktionelle Gruppen ausgewählt aus -NH₃⁺, -NRH₂⁺, -NR₃⁺, =NR⁺;-PR₃⁺, wobei es sich bei R um Alkylgruppen mit bevorzugt 1 bis 20 Kohlenstoffatomen handelt, oder andere kationische Gruppen aufweisen. Bevorzugt weisen sie kovalent gebundene funktionelle Gruppen, ausgewählt aus -NH₃⁺, -NRH₂⁺, -NR₃⁺, bevorzugter ausgewählt aus -NH₃⁺, -NR₃⁺, noch bevorzugter-NR₃⁺, auf.

Wenn die Diffusionsbarriere **D eine** kationenleitende Membran ist, handelt es sich insbesondere um eine Membran, die für die vom Salz **S** umfassten Kationen selektiv sind. Noch bevorzugter ist die Diffusionsbarriere **D** dann eine alkalikationenleitende Membran, noch mehr bevorzugter eine kalium-, und/oder natriumionenleitende Membran, am bevorzugtesten eine natriumionenleitende Membran.

Kationenleitende Membranen sind beispielsweise beschrieben auf Seite 181 des Lehrbuchs von Volkmar M. Schmidt Elektrochemische Verfahrenstechnik: Grundlagen, Reaktionstechnik, Prozessoptimierung, 1. Auflage (8. Oktober 2003).

Noch bevorzugter werden demnach als kationenleitende Membran organische Polymere, welche insbesondere aus Polyethylen, Polybenzimidazolen, Polyetherketonen, Polystyrol, Polypropylen oder fluorierten Membranen wie Polyperfluorethylen, bevorzugt Polystyrol, Polyperfluorethylen, ausgewählt sind, eingesetzt, wobei diese kovalent gebunden funktionelle Gruppen ausgewählt aus -SO₃⁻, -COO⁻, -PO₃²⁻, -PO₂H⁻ , bevorzugt -SO₃⁻, (beschrieben in DE 10 2010 062 804 A1, US4,831,146) tragen.

Dies kann zum Beispiel ein sulfoniertes Polyperfluorethylen (Nafion ^{®} mit CAS-Nummer: 31175-20-9) sein. Diese sind dem Fachmann beispielsweise aus der WO 2008/076327 A1, Absatz [058], US 2010/0044242 A1, Absatz [0042] oder der US 2016/ 0204459 A1 bekannt und unter dem Handelsnamen Nafion ^{®}, Aciplex ^{®} F, Flemion ^{®}, Neosepta ^{®}, Ultrex ^{®}, PC-SK ^{®} erwerblich. Neosepta^{®}-Membranen sind beispielsweise beschrieben von S.A. Mareev, D.Yu. Butylskii, N.D. Pismenskaya, C. Larchet, L. Dammak, V.V. Nikonenko, Journal of Membrane Science 2018, 563, 768-776.

Wird eine kationenleitende Membran als Diffusionsbarriere **D** eingesetzt, kann dies beispielsweise ein mit Sulfonsäuregruppen funktionalisiertes Polymer, insbesondere der folgenden Formel **P_{NAFION},** wobei n und m unabhängig voneinander eine ganze Zahl von 1 bis 10⁶, bevorzugter eine ganze Zahl von 10 bis 10⁵, noch bevorzugter eine ganze Zahl von 10² bis 10⁴ ist, sein.

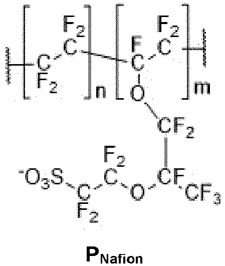

Als alkalikationenleitender Festelektrolyt **F_{K}** kommt jeder Festelektrolyt in Frage, welcher Kationen, insbesondere Alkalikationen, noch bevorzugter Natriumkationen, von der Mittelkammer **K_{M}** in die Kathodenkammer **K_{K}** transportieren kann. Solche Festelektrolyten sind dem Fachmann bekannt und beispielsweise in der DE 10 2015 013 155 A1, in der WO 2012/048032 A2, Absätze [0035], [0039], [0040], in der US 2010/0044242 A1, Absätze [0040], [0041], in der DE 10360758 A1, Absätze [014] bis [025] beschrieben. Sie werden kommerziell unter dem Namen NaSICON, LiSICON, KSICON vertrieben. Ein natriumionenleitender Festelektrolyt **F_{K}** ist bevorzugt, wobei dieser noch bevorzugter eine NaSICON-Struktur aufweist. Erfindungsgemäß einsetzbare NaSICON-Strukturen sind außerdem beispielsweise beschrieben von N. Anantharamulu, K. Koteswara Rao, G. Rambabu, B. Vijaya Kumar, Velchuri Radha, M. Vithal, J Mater Sei 2011, 46, 2821-2837.

NaSICON hat bevorzugt eine Struktur der Formel M^{I}_{1+2w+x-y+z} M^{II}_{w} M^{III}ₓ Zr^{IV}_{2-w-x-y} M^{V}_{y} (SiO₄)_{z} (PO₄)_{3-z}.
M^{I} ist ausgewählt aus Na⁺, Li⁺, bevorzugt Na⁺.
M" ist ein zweiwertiges Metallkation, bevorzugt ausgewählt aus Mg²⁺, Ca²⁺, Sr²⁺, Ba²⁺, Co²⁺, Ni²⁺, bevorzugter ausgewählt aus Co²⁺, Ni²⁺.
M^{III} ist ein dreiwertiges Metallkation, bevorzugt ausgewählt aus Al³⁺, Ga³⁺, Sc³⁺, La³⁺, Y³⁺, Gd³⁺, Sm³⁺, Lu³⁺, Fe³⁺, Cr³⁺, bevorzugter ausgewählt aus Sc³⁺, La³⁺, Y³⁺, Gd³⁺, Sm³⁺, besonders bevorzugt ausgewählt aus Sc³⁺, Y³⁺, La³⁺.
M^{V} ist ein fünfwertiges Metallkation, bevorzugt ausgewählt aus V⁵⁺, Nb⁵⁺, Ta⁵⁺.

Die römischen Indizes I, II, III, IV, V geben die Oxidationszahlen an, in der die jeweiligen Metallkationen vorliegen.
w, x, y, z sind reelle Zahlen, wobei gilt, dass 0 ≤ x < 2, 0 ≤ y < 2, 0 ≤ w < 2, 0 ≤ z < 3,
und wobei w, x, y, z so gewählt werden, dass gilt 1 + 2w + x - y + z ≥ 0 und 2 - w - x - y ≥ 0.

NaSICON hat erfindungsgemäß noch bevorzugter eine Struktur der Formel Na_{(1 + v)}Zr₂SiᵥP_{(3 - v)}O₁₂, wobei v eine reelle Zahl ist, für die 0 ≤ v ≤ 3 gilt. Am bevorzugtesten gilt v = 2.4

Die Kathodenkammer **K_{K}** umfasst auch einen Zulauf **Z_{KK}** und einen Ablauf **A_{KK},** der es ermöglicht, in die Kathodenkammer **K_{K}** Flüssigkeit, wie zum Beispiel die Lösung **L₂,** zuzufügen und darin befindliche Flüssigkeit, wie zum Beispiel die Lösung **L₁,** zu entfernen. Der Zulauf **Z_{KK}** und der Ablauf **A_{KK}** sind dabei so an der Kathodenkammer **K_{K}** angebracht, dass die Lösung beim Durchströmen der Kathodenkammer **K_{K}** die kathodische Elektrode **E_{K}** kontaktiert. Dies ist die Voraussetzung dafür, dass bei der Durchführung des erfindungsgemäßen Verfahrens am Ablauf **A_{KK}** die Lösung **L₁** erhalten wird, wenn die Lösung **L₂** eines Alkalialkoholats XOR im Alkohol ROH durch **K_{K}** geleitet wird.

Die Anodenkammer **K_{A}** umfasst auch einen Ablauf **A_{KA},** der es ermöglicht, in der Anodenkammer **K_{A}** befindliche Flüssigkeit, beispielsweise die wässrige Lösung **L₄,** zu entfernen. Daneben umfasst die Mittelkammer **K_{M}** einen Zulauf **Z_{KM},** während **K_{A}** und **K_{M}** durch eine Verbindung **V_{AM}** miteinander verbunden sind. Dadurch kann zu **K_{M}** eine Lösung **L₃** gegeben und diese dann durch **K_{M}** geleitet werden, und über **V_{AM}** in die Anodenkammer **K_{A},** dann durch diese **K_{A}** geleitet werden. **V_{AM}** und der Ablauf **A_{KA}** sind dabei so an der Anodenkammer **K_{A}** angebracht, dass die Lösung **L₃** beim Durchströmen der Anodenkammer **K_{A}** die anodische Elektrode **E_{A}** kontaktiert. Dies ist die Voraussetzung dafür, dass bei der Durchführung des erfindungsgemäßen Verfahrens am Ablauf **A_{KA}** die wässrige Lösung **L₄** erhalten wird, wenn die Lösung **L₃** zuerst durch **K_{M},** dann **V_{AM},** dann **K_{A}** geleitet wird.

Zuläufe **Z_{KK}, Z_{KM}, Z_{KA}** und Abläufe **A_{KK}, A_{KA}, A_{KM}** können nach dem Fachmann bekannten Verfahren an der Elektrolysezelle angebracht werden.

Die Mittelkammer **K_{M}** weist erfindungsgemäß einen Gaseinlass **G_{E}** und einen Gasauslass **G_{A}** auf. Als Gaseinlass **G_{E}** eignet sich jede Öffnung in der Mittelkammer **K_{M},** durch die Gase in die Mittelkammer **K_{M},** insbesondere Gase **I,** eingeleitet werden können. Bevorzugt wird als Gaseinlass **G_{E}** einer ausgewählt aus Gaseinlass mit Kondensatabscheider, Druckventil und einer Bohrung mit einer angeschlossenen Belüftungsleitung, noch bevorzugter eine Bohrung mit angeschlossener Belüftungsleitung, eingesetzt.

Als Gasauslass **G_{A}** eignet sich jede Öffnung in der Mittelkammer **K_{M},** durch die die Gase in der Mittelkammer **K_{M},** insbesondere Gase **I,** in die Atmosphäre entweichen können Bevorzugt wird als Gasauslass **G_{A}** einer ausgewählt aus Gasabgang, bevorzugter einen Gasabgang mit Kondensatabscheider, einem Druckventil und einer Bohrung mit einer angeschlossenen Belüftungsleitung eingesetzt, noch bevorzugter eine Bohrung mit angeschlossener Belüftungsleitung eingesetzt.

Der Gasauslass **G_{A}** wird bevorzugt so an der Mittelkammer **K_{M}** angebracht, dass die Gase aus der Mittelkammer **K_{M}** entgegen der Schwerkraft entweichen.

Der Gaseinlass **G_{E}** wird bevorzugt so an der Mittelkammer **K_{M}** angebracht, dass die Gase in die Mittelkammer **K_{M}** entgegen der Schwerkraft eingeleitet werden.

Die Belüftungsleitung wird mit dem Ablauf **A_{KA}** <106> (also dem Chlorabzug bzw. dem Soleausgang der Anolytkammer) eingebunden, kann aber alternativ frei abblasend gegen die Atmosphäre betrieben werden. Den Chlorabzug für die Entfernung des Gases **I** zu nutzen, hat den Vorteil eines vereinfachten Aufbaus der Elektrolysezelle **E.** Die Abführung des Gases **I** unabhängig vom Chlorabzug führt aber zu Verbesserung der Chlorzusammensetzung, da Gas **I** nicht mit dem Chlor verdünnt wird. Somit ist es besonders bevorzugt, wenn die Belüftungsleitung nicht mit dem Ablauf **A_{KA}** <106> (also dem Chlorabzug bzw. dem Soleausgang der Anolytkammer) eingebunden ist, also frei abblasend gegen die Atmosphäre betrieben wird.

Als Gas I kann jedes dem Fachmann geläufige Gas verwendet werden, welches sich zu dem Zweck eignet. Bevorzugt umfasst **I** mindestens ein Gas ausgewählt aus der Gruppe bestehend aus Stickstoff, Edelgase, Sauerstoff. Bevorzugter umfasst **I** mindestens ein Gas ausgewählt aus der Gruppe bestehend aus Stickstoff, Edelgase.

Besonders bevorzugt wird als Gas **I** Luft eingesetzt. Diese kann als Druckluft in die Mittelkammer **K_{M}** eingebracht werden.

Die Verbindung **V_{AM}** kann innerhalb der Elektrolysezelle **E** und/oder außerhalb der Elektrolysezelle **E** ausgebildet sein.

Ist die Verbindung **V_{AM}** innerhalb der Elektrolysezelle **E** ausgebildet, wird sie bevorzugt durch mindestens eine Perforation in der Diffusionsbarriere **D** gebildet.

Ist die Verbindung **V_{AM}** außerhalb der Elektrolysezelle **E** ausgebildet, wird sie bevorzugt durch eine außerhalb der Elektrolysezelle **E** verlaufende Verbindung von **K_{M}** und **K_{A}** gebildet, insbesondere dadurch, dass in der Mittelkammer **K_{M}** ein Ablauf **A_{KM}** durch die Außenwand **W_{A},** bevorzugt am Boden der Mittelkammer **K_{M},** wobei noch bevorzugter der Zulauf **Z_{KM}** an der Oberseite der Mittelkammer **K_{M}** ist, gebildet wird, und in der Anodenkammer **K_{A}** ein Zulauf **Z_{KA}** durch die Außenwand **W_{A},** bevorzugt am Boden der Anodenkammer **K_{A},** gebildet wird, und diese durch eine Leitung, beispielsweise ein Rohr oder ein Schlauch, der bevorzugt ein Material ausgewählt aus Gummi, Kunststoff umfasst, verbunden sind. Der Ablauf **A_{KA}** ist dann noch bevorzugter an der Oberseite der Anodenkammer **K_{A}.**

"Ablauf **A_{KM}** am Boden der Mittelkammer **K_{M}**" bedeutet, dass der Ablauf **A_{KM}** so an der Elektrolysezelle **E** angebracht ist, dass die Lösung **L₃** die Mittelkammer **K_{M}** gleichgerichtet mit der Schwerkraft verlässt.

"Zulauf **Z_{KA}** am Boden der Anodenkammer **K_{A}"** bedeutet, dass der Zulauf **Z_{KA}** so an der Elektrolysezelle **E** angebracht ist, dass die Lösung **L₃** in die Anodenkammer **K_{A}** entgegen der Schwerkraft eintritt.

"Zulauf **Z_{KM}** an der Oberseite der Mittelkammer **K_{M}"** bedeutet, dass der Zulauf **Z_{KM}** so an der Elektrolysezelle **E** angebracht ist, dass die Lösung **L₃** in die Mittelkammer **K_{M}** gleichgerichtet mit der Schwerkraft eintritt.

"Ablauf **A_{KA}** an der Oberseite der Anodenkammer **K_{A}"** bedeutet, dass der Ablauf **A_{KA}** so an der Elektrolysezelle **E** angebracht ist, dass die Lösung **L₄** in die Anodenkammer **K_{A}** entgegen der Schwerkraft verlässt.

Diese Ausführungsform ist dabei besonders vorteilhaft und deshalb bevorzugt, wenn der Ablauf **A_{KM}** durch die Außenwand **W_{A}** am Boden der Mittelkammer **K_{M},** und der Zulauf **Z_{KA}** durch die Außenwand **W_{A}** am Boden der Anodenkammer **K_{A},** gebildet wird. Durch diese Anordnung ist es besonders einfach möglich in der Mittelkammer **K_{M}** entstehende Gase durch den Gasauslass **G_{A}** von **L₃** abzutrennen, während in der Anodenkammer **K_{A}** gebildete Gase mit **L₄** die Anodenkammer **K_{A}** verlassen und dann weiter abgetrennt werden können.

Demnach ist die Fließrichtung von **L₃** in **K_{M}** der Fließrichtung von **L₃** in **K_{A}** entgegengerichtet oder gleichgerichtet, bevorzugt entgegengerichtet, je nachdem wie die Verbindung **V_{AM}** an der Elektrolysezelle **E** angebracht ist. Bevorzugt ist die Fließrichtung von **L₃** in **K_{M}** der Schwerkraft gleichgerichtet.

Es ist außerdem bevorzugt, dass **I** <121 > mindestens teilweise entgegen der Schwerkraft in die Elektrolysezelle **E** <100> geleitet wird und mindestens teilweise entgegen der Schwerkraft aus dieser abgeführt wird.

In einer bevorzugten Ausführungsform der vorliegenden Erfindung wird Verbindung **V_{AM}** zwischen Mittelkammer **K_{M}** und Anodenkammer **K_{A}** so angeordnet, dass mindestens ein Teil der wässrigen Lösung **L₃,** bevorzugter die gesamte wässrige Lösung **L₃,** die Mittelkammer **K_{M}** und die Anodenkammer **K_{A}** vollständig durchströmt.

Wenn die Verbindung **V_{AM}** <112> außerhalb der Elektrolysezelle **E** <100> ausgebildet ist, kann dies insbesondere dadurch gewährleistet werden, dass **Z_{KM}** <108> und **A_{KM}** <118> an gegenüberliegenden Seiten der Außenwand **W_{A}** <117> der Mittelkammer **K_{M}** <103> angeordnet sind (also **Z_{KM}** <108> am Boden und **A_{KM}** <118> an der Oberseite der Elektrolysezelle **E** <100> oder umgekehrt) und **Z_{KA}** <119> und **A_{KA}** <106> an gegenüberliegenden Seiten der Außenwand **W_{A}** <117> der Anodenkammer **K_{A}** <101> angeordnet ist (also **Z_{KA}** <119> am Boden und **A_{KA}** <106> an der Oberseite der Elektrolysezelle **E** <100> oder umgekehrt), wie es insbesondere in Abbildung 1 gezeigt ist. Durch diese Geometrie muss **L₃** <114> die beiden Kammern **K_{M}** <103> und **K_{A}** <101 > durchströmen. Dabei können **Z_{KA}** <119> und **Z_{KM}** <108> an derselben Seite der Elektrolysezelle **E** <100> ausgebildet sein, wobei dann automatisch auch **A_{KM}** <118> und **A_{KA}** <106> an derselben Seite der Elektrolysezelle **E** <100> ausgebildet sind. Alternativ können wie in Abbildung 1 gezeigt, **Z_{KA}** <119> und **Z_{KM}** <108> an gegenüberliegenden Seiten der Elektrolysezelle **E** <100> ausgebildet sein, wobei dann automatisch auch **A_{KM}** <118> und **A_{KA}** <106> an gegenüberliegenden Seiten der Elektrolysezelle **E** <100> ausgebildet sind.

Wenn die Verbindung **V_{AM}** <112> innerhalb der Elektrolysezelle **E** <100> ausgebildet ist, kann dies insbesondere dadurch gewährleistet werden, dass eine Seite ("Seite A") der Elektrolysezelle **E** <100>, bei der es sich um die Oberseite oder den Boden der Elektrolysezelle **E** <100> handelt, bevorzugt wie in Abbildung 2 gezeigt um die Oberseite handelt, den Zulauf **Z_{KM}** <108> und den Ablauf **A_{KA}** <106> umfasst und die Diffusionsbarriere **D** <110> ausgehend von dieser Seite A sich in die Elektrolysezelle <100> erstreckt, aber nicht ganz bis zur der der Seite A gegenüberliegenden Seite ("Seite B") der Elektrolysezelle **E** <100>, bei der es dann sich um den Boden bzw. die Oberseite der Elektrolysezelle **E** <100> handelt, reicht und dabei 50 % oder mehr der Höhe der Dreikammerzelle **E** <100>, bevorzugter 60 % bis 99 % der Höhe der Dreikammerzelle **E** <100>, noch bevorzugter 70 % bis 95 % der Höhe der Dreikammerzelle **E** <100>, noch mehr bevorzugter 80 % bis 90 % der Höhe der Dreikammerzelle **E** <100>, noch viel mehr bevorzugter 85 % der Höhe der Dreikammerzelle **E** <100> durchspannt. Dadurch dass die Diffusionsbarriere **D** <110> die Seite B der Dreikammerzelle **E** <100> nicht berührt, entsteht so ein Spalt zwischen Diffusionsbarriere **D** <110> und der Außenwand **W_{A}** der Seite B der Dreikammerzelle **E** <100>. Der Spalt ist dann die Verbindung **V_{AM}** <112>. Durch diese Geometrie muss **L₃** die beiden Kammern **K_{M}** und **K_{A}** vollständig durchströmen.

Diese Ausführungsformen gewährleisten am besten, dass am säureempfindlichen Festelektrolyten die wässrige Salzlösung **L₃** vorbeiströmt, bevor diese mit der anodischen Elektrode **E_{A}** <104> in Kontakt kommt, wodurch es zur Bildung von Säuren kommt.

"Boden der Elektrolysezelle **E"** ist erfindungsgemäß die Seite der Elektrolysezelle **E,** durch die eine Lösung (z.B. **L₃** <114> bei **A_{KM}** <118> in Abbildung 1) gleichgerichtet mit der Schwerkraft aus der Elektrolysezelle **E** austritt bzw. die Seite der Elektrolysezelle **E,** durch die eine Lösung (z.B. **L₂** <113> bei **Z_{KK}** <107> in Abbildungen 1 und 2 und **L₃** <114> bei **A_{KA}** <119> in Abbildung 1) der Elektrolysezelle **E** entgegen der Schwerkraft zugeführt wird.

"Oberseite der Elektrolysezelle **E"** ist erfindungsgemäß die Seite der Elektrolysezelle **E,** durch die eine Lösung (z.B. **L₄** <116> bei **A_{KA}** <106> und **L₁** <115> bei **A_{KK}** <109> in Abbildungen 1 und 2) entgegen der Schwerkraft aus der Elektrolysezelle **E** austritt bzw. die Seite der Elektrolysezelle **E,** durch die eine Lösung (z.B. **L₃** <114> bei **Z_{KM}** <108> in Abbildungen 1 und 2) der Elektrolysezelle **E** gleichgerichtet mit der Schwerkraft zugeführt wird.

### 4.2 Erfindungsgemäße Verfahrensschritte

Das erfindungsgemäße Verfahren umfasst die folgenden Schritte (a), (b), (c) und (d), welche gleichzeitig durchgeführt werden.

Im Schritt (a) wird eine Lösung **L₂** umfassend den Alkohol ROH, bevorzugt umfassend ein Alkalialkoholat XOR im Alkohol ROH, durch **K_{K}** geleitet. X ist ein Alkalimetallkation und Rein Alkylrest mit 1 bis 4 Kohlenstoffatomen.

Bevorzugt ist X aus der Gruppe bestehend aus Li⁺, K⁺, Na⁺, bevorzugter aus der Gruppe bestehend aus K⁺, Na⁺ ausgewählt. Am bevorzugtesten ist X = Na⁺.

R ist bevorzugt aus der Gruppe bestehend aus n-Propyl, iso-Propyl, Ethyl, Methyl ausgewählt, bevorzugter aus der Gruppe bestehend aus Ethyl, Methyl ausgewählt. Am bevorzugtesten ist R Methyl.

Die Lösung **L₂** ist bevorzugt frei von Wasser. "Frei von Wasser" bedeutet erfindungsgemäß, dass das Gewicht des Wassers in der Lösung **L₂** bezogen auf das Gewichts des Alkohols ROH in der Lösung **L₂** (Massenverhältnis) ≤ 1 : 10, bevorzugter ≤ 1 : 20, noch bevorzugter ≤ 1 : 100, noch bevorzugter ≤ 0.5 : 100 ist.

Umfasst die Lösung **L₂** XOR, so liegt der Massenanteil von XOR in der Lösung **L₂,** bezogen auf die gesamte Lösung **L₂,** insbesondere bei > 0 bis 30 Gew.-%, bevorzugt bei 5 bis 20 Gew.-%, noch bevorzugter bei 10 bis 20 Gew.-%, noch bevorzugter bei 10 bis 15 Gew.-%, am bevorzugtesten bei 13 bis 14 Gew.-%, am allerbevorzugtesten bei 13 Gew.-%.

Umfasst die Lösung L₂ XOR, so liegt in der Lösung **L₂** insbesondere das Massenverhältnis von XOR zu Alkohol ROH im Bereich 1 : 100 bis 1 : 5, bevorzugter im Bereich 1 : 25 bis 3 : 20, noch bevorzugter im Bereich 1 : 12 bis 1 : 8, noch bevorzugter bei 1 : 10.

In Schritt (b) wird eine neutrale oder alkalische wässrige Lösung **L₃** eines Salzes **S** umfassend X als Kation durch **K_{M},** dann über **V_{AM},** dann durch **K_{A}** geleitet.

Das Salz **S** ist oben beschrieben. Der pH der wässrigen Lösung **L₃** ist dabei ≥ 7.0, bevorzugt im Bereich 7 bis 12, bevorzugter im Bereich 8 bis 11, noch bevorzugter 10 bis 11, am bevorzugtesten bei 10.5.

Der Massenanteil des Salzes **S** in der Lösung **L₃** liegt dabei bevorzugt im Bereich > 0 bis 20 Gew.-%, bevorzugt 1 bis 20 Gew.-%, bevorzugter bei 5 bis 20 Gew.-%, noch bevorzugter bei 10 bis 20 Gew.-%, am bevorzugtesten bei 20 Gew.-%, bezogen auf die gesamte Lösung **L₃.**

Im Schritt (c) wird dann eine Spannung zwischen **E_{A}** und **E_{K}** angelegt.

Dadurch kommt es zu einem Stromtransport von der Ladungsquelle zur Anode, zu einem Ladungstransport über Ionen zur Kathode und schließlich zu einem Stromtransport zurück zur Ladungsquelle. Die Ladungsquelle ist dem Fachmann bekannt und ist typischerweise ein Gleichrichter, der Wechselstrom in Gleichstrom umwandelt und über Spannungsumwandler bestimmte Spannungen erzeugen kann.

Dies führt wiederum zu folgenden Konsequenzen:
am Ablauf **A_{KK}** <109> wird die Lösung **L₁** <115> erhalten, wobei die Konzentration von XOR in **L₁** <115> höher ist als in **L₂** <113>,
am Ablauf **A_{KA}** <106> wird eine wässrige Lösung **L₄** <116> von **S** erhalten, wobei die Konzentration von **S** in **L₄** <116> geringer ist als in **L₃** <114>.

Im erfindungsgemäßen Verfahren wird insbesondere eine solche Spannung angelegt, dass so ein Strom fließt, so dass die Stromdichte (= Verhältnis des Stroms, der zur Elektrolysezelle fließt, zur Fläche des Festelektrolyten, die den in der Mittelkammer **K_{M}** befindlichen Anolyten kontaktiert) im Bereich von 10 bis 8000 A/ m² liegt, bevorzugter im Bereich von 100 bis 2000 A/ m² liegt, noch bevorzugter im Bereich von 300 bis 800 A/ m², noch bevorzugter bei 494 A/ m² liegt. Dies kann vom Fachmann standardmäßig bestimmt werden. Die Fläche des Festelektrolyten, die den in der Mittelkammer **K_{M}** befindlichen Anolyten kontaktiert beträgt insbesondere 0.00001 bis 10 m², bevorzugt 0.0001 bis 2.5 m², bevorzugter 0.0002 bis 0.15 m², noch bevorzugter 2.83 cm².

Es versteht sich von selbst, dass im erfindungsgemäßen Verfahren Schritt (c) dann durchgeführt wird, wenn beide Kammern **K_{M}** und **K_{A}** mindestens teilweise mit **L₃** beladen sind und **K_{K}** mit **L₂** mindestens teilweise beladen ist.

Die Tatsache, dass in Schritt (c) ein Ladungstransport zwischen **E_{A}** und **E_{K}** stattfindet, impliziert, dass **K_{K}, K_{M}** und **K_{A}** gleichzeitig mit **L₂** bzw. **L₃** so beladen sind, dass sie die Elektroden **E_{A}** und **E_{K}** soweit bedecken, dass der Stromkreislauf geschlossen ist.

Das ist insbesondere dann der Fall, wenn kontinuierlich ein Flüssigkeitsstrom von **L₃** durch **K_{M}, V_{AM}** und **K_{A}** und ein Flüssigkeitsstrom von **L₂** durch **K_{K}** geleitet wird und der Flüssigkeitsstrom von **L₃** die Elektrode **E_{A}** und der Flüssigkeitsstrom von **L₂** die Elektrode **E_{K}** mindestens teilweise, bevorzugt vollständig bedeckt.

In Schritt (d) des erfindungsgemäßen Verfahrens wird Gas **I** <121> wird über den Gaseinlass **G_{E}** <122> in die Lösung **L₃** <114> in der Mittelkammer **K_{M}** <103> geleitet, und über den Gasauslass **G_{A}** <120> aus der Mittelkammer **K_{M}** <103> abgeführt.

Diese Einleitung des Gases **I** <121> führt zu Verwirbelungen und Turbulenzen in der Lösung **L₃** <114> in der Mittelkammer **K_{M}** <103>, durch die der sich mit Fortgang der Elektrolyse aufbauende pH-Gradient zerstört wird.

In einer weiteren bevorzugten Ausführungsform wird das erfindungsgemäße Verfahren kontinuierlich durchgeführt, also Schritt (a), Schritt (b) und Schritt (d) kontinuierlich durchgeführt und dabei gemäß Schritt (c) Spannung angelegt.

Im erfindungsgemäßen Verfahren wird am Ablauf **A_{KK}** die Lösung **L₁** erhalten, wobei die Konzentration von XOR in **L₁** höher ist als in **L₂.** Wenn **L₂** schon XOR umfasste, ist die Konzentration von XOR in **L₁** bevorzugt um das 1.01 bis 2.2-fache, bevorzugter um das 1.04 bis 1.8-fache, noch bevorzugter um das 1.077 bis 1.4-fache, noch mehr bevorzugter um das 1.077 bis 1.08-fache höher als in **L₂,** am bevorzugtesten um das 1.077-fache höher als in **L₂,** wobei noch bevorzugter dabei der Massenanteil von XOR in **L₁** und in **L₂** im Bereich 10 bis 20 Gew.-%, noch mehr bevorzugter 13 bis 14 Gew.-% liegt.

Am Ablauf **A_{KA}** wird eine wässrige Lösung **L₄** von **S** erhalten wird, wobei die Konzentration von **S** in **L₄** geringer ist als in **L₃.**

Die Konzentration des Kations X in der wässrigen Lösung **L₃** liegt bevorzugt im Bereich 3.5 bis 5 mol/l, bevorzugter 4 mol/l. Die Konzentration des Kations X in der wässrigen Lösung **L₄** ist bevorzugter 0.5 mol/l geringer als jene der jeweils eingesetzten wässrigen Lösung **L₃.**

Insbesondere wird das erfindungsgemäße Verfahren bei einer Temperatur von 20 °C bis 70 °C, bevorzugt 35 °C bis 65 °C, bevorzugter 35 °C bis 60 °C, noch bevorzugter 35 °C bis 50 °C und einem Druck von 0.5 bar bis 1.5 bar, bevorzugt 0.9 bar bis 1.1 bar, bevorzugter 1.0 bar durchgeführt.

Bei der Durchführung des erfindungsgemäßen Verfahrens entsteht in der in der Kathodenkammer **K_{K}** typischerweise Wasserstoff, der über den Ablauf **A_{KK}** aus der Zelle zusammen mit der Lösung **L₁** abgeführt werden kann. Die Mischung aus Wasserstoff und Lösung **L₁** kann dann in einer besonderen Ausführungsform der vorliegenden Erfindung nach dem Fachmann bekannten Verfahren aufgetrennt werden. In der Anodenkammer **K_{A},** wenn es sich bei der eingesetzten Alkalimetallverbindung um ein Halogenid, insbesondere Chlorid handelt, kann Chlor oder ein anderes Halogengas entstehen, welches über den Ablauf **A_{KK}** aus der Zelle zusammen mit der Lösung **L₄** abgeführt werden kann. Daneben kann auch Sauerstoff oder/und Kohlendioxid entstehen, was ebenso abgeführt werden kann. Die Mischung aus Chlor, Sauerstoff und/oder COz und Lösung **L₄** kann dann in einer besonderen Ausführungsform der vorliegenden Erfindung nach dem Fachmann bekannten Verfahren aufgetrennt werden. Genauso kann dann nach Abtrennung der Gase Chlor, Sauerstoff und/oder COz von der Lösung **L₄** diese nach dem Fachmann bekannten Verfahren voneinander abgetrennt werden.

Diese Ergebnisse waren überraschend und im Lichte des Standes der Technik nicht zu erwarten. Durch das erfindungsgemäße Verfahren wird der säurelabile Feststoffelektrolyt vor Korrosion geschützt, ohne dass dabei wie im Stand der Technik Alkoholatlösung aus dem Kathodenraum als Pufferlösung geopfert werden muss. Damit ist das erfindungsgemäße Verfahren effizienter als die in WO 2008/076327 A1 und WO 2009/073062 A1 beschriebene Vorgehensweise, in der die Produktlösung für die Mittelkammer verwendet wird, was den Gesamtumsatz schmälert.

Daneben wird dadurch, dass ein Gas I durch die Mittelkammer geleitet wird, der in der Mittelkammer befindliche Elektrolyt konstant turbulent vermischt, so dass sich kein pH-Gradient ausbilden kann, der die säureempfindliche alkaliionenleitende Festelektrolyten schädigen kann.

### Bevorzugte Ausführungsformen der Erfindung

Abbildung 1 zeigt eine bevorzugte Ausführungsform der Erfindung in einer Dreikammerzelle **E** <100>. Diese umfasst eine Kathodenkammer **K_{K}** <102>, eine Mittelkammer **K_{M}** <103> und eine Anodenkammer **K_{A}** <101 >. Die Anodenkammer **K_{A}** <101> und die Mittelkammer **K_{M}** <103> sind durch eine sich über den ganzen Querschnitt der Dreikammerzelle **E** <100> erstreckende Anionenaustauschermembran als Diffusionsbarriere **D** <110> voneinander getrennt. Die Kathodenkammer **K_{K}** <102> und die Mittelkammer **K_{M}** <103> sind durch einen für Natriumionen selektiven permeable Festelektrolyten (NaSICON) <111> voneinander getrennt, der sich über den ganzen Querschnitt der Dreikammerzelle **E** <100> erstreckt. Die Kathodenkammer **K_{K}** <102> umfasst eine kathodische Elektrode **E_{K}** <105>, einen Zulauf **Z_{KK}** <107> und einen Ablauf **A_{KK}** <109>.

Die Anodenkammer **K_{A}** <101> umfasst eine anodische Elektrode **E_{A}** <104> und einen Ablauf **A_{KA}** <106> und ist mit der Mittelkammer **K_{M}** <103> über die Verbindung **V_{AM}** <112> verbunden. Die Mittelkammer **K_{M}** <103> umfasst daneben einen Zulauf **Z_{KM}** <108>. In der Ausführungsform gemäß Abbildung 1 wird die Verbindung **V_{AM}** <112> außerhalb der Elektrolysezelle **E** <100>, insbesondere durch ein Rohr oder Schlauch, dessen Material aus Gummi, Metall oder Kunststoff ausgewählt sein kann, gebildet, mit welcher Flüssigkeit aus der Mittelkammer **K_{M}** <103> in die Anodenkammer **K_{A}** <101 > außerhalb der Außenwand **W_{A}** <117> der Dreikammerzelle **E** <100> geleitet werden kann. Die Verbindung **V_{AM}** <112> verbindet einen Ablauf **A_{KM}** <118>, der am Boden der Mittelkammer **K_{M}** <103> die Außenwand **W_{A}** <117> der Elektrolysezelle **E** <100> durchbricht, mit einem Zulauf **Z_{KA}** <119>, der am Boden der Anodenkammer **K_{A}** <101> die Außenwand **W_{A}** <117> der Elektrolysezelle **E** <100> durchbricht.

Über den Zulauf **Z_{KK}** <107> wird ein Elektrolyt **L₂** <113> in die Kathodenkammer **K_{K}** <102> geleitet. Der Elektrolyt **L₂** <113> umfasst Methanol, bevorzugt wird als Elektrolyt **L₂** <113> eine methanolische Lösung von Natriummethanolat **L₂** <113> eingesetzt.

Über den Zulauf **Z_{KM}** <108> wird gleichzeitig in die Mittelkammer **K_{M}** <103> eine wässrige NaCl-Lösung **L₃** <114> mit pH 10.5 eingeleitet. Diese strömt durch die Mittelkammer **K_{M}** <103> und die Verbindung **V_{AM}** <112> in die Anodenkammer **K_{A}** <101 >.

Es wird dabei eine Spannung zwischen der kathodischen Elektrode **E_{K}** <105> und der anodischen Elektrode **E_{A}** <104> angelegt. Dadurch wird in der Kathodenkammer **K_{K}** <102> Methanol im Elektrolyten **L₂** <113> zu Methanolat und H₂ reduziert (CH₃OH + e⁻ → CH₃O⁻ + ½ H₂). In der Anodenkammer **K_{A}** <101 > findet die Oxidation von Chloridionen zu molekularem Chlor statt (Cl⁻ → ½ Cl₂ + e). Chlorgas Clz bildet in Wasser gemäß der Reaktion Clz + H₂O → HOCI + HCl hypochlorige Säure und Salzsäure, welche mit weiteren Wassermolekülen sauer reagieren. Die Acidität schädigt den NaSICON-Festelektrolyten <111>, wird aber durch die erfindungsgemäße Anordnung in der Anodenkammer **K_{A}** <101 > begrenzt und somit in der Elektrolysezelle **E** <100> vom NaSICON-Festelektrolyten **F_{K}** <111 > ferngehalten. Dadurch erhöht sich dessen Lebensdauer beträchtlich.

Natriumionen diffundieren dabei von der Mittelkammer **K_{M}** <103> durch den NaSICON-Festelektrolyten <111 > in die Kathodenkammer **K_{K}** <102>. Insgesamt erhöht sich dadurch die Konzentration von Natriummethanolat in der Kathodenkammer **K_{K}** <102>, wodurch eine methanolische Lösung von Natriummethanolat **L₁** <115> erhalten wird, deren Konzentration von Natriummethanolat gegenüber **L₂** <113> erhöht wird. Aufgrund der Geometrie der Dreikammerzelle **E** <100> und der erfindungsgemäßen Führung der wässrigen Lösung **L₃** <114> wird der säureempfindliche NaSICON-Festelektrolyt <111> vor der gegenüber **L₃** <114> erhöhten Acidität der in der Anodenkammer **K_{A}** <101 > resultierenden Lösung **L₄** <116> geschützt.

Am Boden der Dreikammerzelle E <100> befindet sich ein Gaseinlass **G_{E}** <122>, durch den Druckluft als Gas **I** <121 > in die Lösung **L₃** <114> in der Mittelkammer **K_{M}** <103> geleitet wird. Dadurch kommt es zu Verwirbelungen und Turbulenzen in der Lösung **L₃** <114>, durch die ein sich in der Mittelkammer **K_{M}** <103> mit Fortgang der Elektrolyse aufbauender, die Elektrolyse erschwerender und den Festelektrolyten schädigender pH-Gradient zerstört wird. Die Druckluft wird dann über den Gasauslass **G_{A}** <120> aus der Mittelkammer **K_{M}** <103> abgeführt.

Die in Abbildung 2 gezeigte Ausführungsform der vorliegenden Erfindung entspricht der in Abbildung 1 gezeigten. Der einzige Unterschied ist dabei, dass die Verbindung **V_{AM}** <112> innerhalb der Elektrolysezelle **E** <100> dergestalt ausgebildet ist, dass sich die Diffusionsbarriere **D** <110> nicht über den gesamten Querschnitt der Dreikammerzelle **E** <100> erstreckt. Die Verbindung **V_{AM}** <112> von der Mittelkammer **K_{M}** <103> in die Anodenkammer **K_{A}** <101 > wird dadurch durch einen Spalt in der Diffusionsbarriere **D** <110> gebildet. Es können in weiteren bevorzugten Ausführungsformen der vorliegenden Erfindung auch Diffusionsbarrieren **D** <110> mit mehr als einem Spalt genutzt werden, so dass sich die Verbindung **V_{AM}** <112> zwischen Mittelkammer **K_{M}** <103> und Anodenkammer **K_{A}** <101> durch mehrere Spalten ausbildet.

### Beispiele

### Vergleichsbeispiel 1

Natriummethylat (NM) wurde über einen kathodischen Prozess hergestellt, wobei in der Mittelkammer als Anolyt 20 Gew.-%-ige NaCl-Lösung (in Wasser) und in der Kathodenkammer 10 Gew-%-ige methanolische NM-Lösung zugeführt wurden.

Dabei bestand die Elektrolysezelle aus drei Kammern, die jener in Abbildung 1 gezeigten entsprach, außer dass diese keinen Gaseinlass **G_{E}** <122> und keinen Gasauslass **G_{A}** <120> aufwies. Dabei wurde der Anolyt durch die mittlere Kammer in die Anodenkammer überführt. Die Verbindung zwischen Mittel- und Anodenkammer wurde durch einen Schlauch, der am Boden der Elektrolysezelle angebracht ist, hergestellt. Die Anodenkammer und mittlere Kammer waren durch eine 2.83 m² Kationenaustauschermembran (Tokuyama AMX, Ammoniumgruppen auf Polymer) getrennt. Kathoden und Mittelkammer waren durch eine Keramik vom Typ NaSICON mit einer Fläche von 2.83 cm² getrennt. Die Keramik hat eine chemische Zusammensetzung der Formel Na_{3.4}Zr_{2.0}Si_{2.4}P_{0.6}O₁₂. Die Durchflussrate des Anolyten betrug 1 l/h, jene des Katholyten betrug 90 ml/h, und es wurde ein Strom von 0.14 A angelegt. Die Temperatur betrug 35 °C. Die Elektrolyse wurde für 500 Stunden durchgeführt, wobei die Spannung konstant bei 5 V verblieb. Allerdings bildet sich in der Mittelkammer über längere Zeit ein pH-Gradient, was auf die Wanderung der Ionen zu den Elektroden im Zuge der Elektrolyse und die Ausbreitung der an der Anode in Folgereaktionen gebildeten Protonen zurückzuführen ist. Diese lokale Erhöhung des pH-Wertes ist unerwünscht, da er den Festelektrolyten angreifen kann und gerade bei sehr langen Laufzeiten zur Korrosion und Bruch des Festelektrolyten führen kann.

### Vergleichsbeispiel 2

Das Vergleichsbeispiel 1 wurde mit einer Zweikammerzelle umfassend nur eine Anoden- und eine Kathodenkammer, wobei die Anodenkammer durch die Keramik vom Typ NaSICON von der Kathodenkammer getrennt war, wiederholt. Somit enthielt diese Elektrolysezelle keine Mittelkammer. Dies schlägt sich in einer schnelleren Korrosion der Keramik im Vergleich zum Vergleichsbeispiel nieder, was zu einem schnellen Anstieg der Spannungskurve führt. Bei einem Startwert der Spannung von < 5 V steigt diese innerhalb von 100 Stunden auf > 20 V.

### Erfinderisches Beispiel

Vergleichsbeispiel 1 wurde wiederholt, wobei in die Mittelkammer neben dem Zulauf des Anolyten eine Bohrung mit 2 mm Durchmesser angebracht (Bohrung 1) als Gasauslass **G_{A}** angebracht wurde. Auf diese Bohrung 1 wurde eine Belüftungsleitung aufgesetzt.

Daneben wurde eine weitere Bohrung (Bohrung 2) als Gaseinlass **G_{E}** am Boden der Mittelkammer angebracht, in die über ein Gasventil Druckluft eingeleitet wurde, die die Mittelkammer über die Bohrung 1 verließ.

### Ergebnis

Durch die Verwendung einer Dreikammerzelle wie im erfindungsgemäßen Verfahren wird die Korrosion des Festelektrolyten verhindert, wobei gleichzeitig kein Alkalialkoholatprodukt für die Mittelkammer geopfert werden muss und die Spannung konstant gehalten wird. Diese Vorteile, die aus dem Vergleich der beiden Vergleichsbeispiele 1 und 2 ersichtlich sind, unterstreichen schon den überraschenden Effekt der vorliegenden Erfindung.

Des Weiteren ist es durch die Ausbildung des Gaszulaufs und Gasabzugs in der Mittelkammer gemäß dem erfinderischen Beispiel möglich, Gase wie Luft einzuleiten. Diese Einleitung von Gasen führt zu Verwirbelungen und Turbulenzen im Elektrolyten in der Mittelkammer, durch die der sich mit Fortgang der Elektrolyse aufbauende pH-Gradient zerstört wird. Dieser Gradient kann gerade bei sehr langen Laufzeiten die Elektrolyse weiter erschweren und zur Korrosion und letztendlich Bruch des Festelektrolyten führen. In der Ausführung gemäß erfindungsgemäßem Beispiel wird dieser pH-Gradient zerstört, was zusätzlich zu den genannten Vorteilen, die eine Dreikammerzelle gegenüber einer Zweikammerzelle erbringt, die Stabilität des Festelektrolyten noch weiter erhöht.

## Patentansprüche

1. Verfahren zur Herstellung einer Lösung **L₁** <115> eines Alkalimetallalkoholats XOR im Alkohol ROH in einer Elektrolysezelle **E** <100>,
wobei **E** <100> mindestens eine Anodenkammer **K_{A}** <101>, mindestens eine Kathodenkammer **K_{K}** <102> und mindestens eine dazwischen liegende Mittelkammer **K_{M}** <103> umfasst,
wobei **K_{A}** <101 > eine anodische Elektrode **E_{A}** <104> und einen Ablauf **A_{KA}** <106> umfasst,
wobei **K_{K}** <102> eine kathodische Elektrode **E_{K}** <105>, einen Zulauf **Z_{KK}** <107> und einen Ablauf **A_{KK}** <109> umfasst,
wobei **K_{M}** <103> einen Zulauf **Z_{KM}** <108>, einen Gaseinlass **G_{E}** <122> und einen Gasauslass **G_{A}** <120> umfasst, durch eine Diffusionsbarriere **D** <110> von **K_{A}** <101> abgetrennt ist und durch einen alkalikationenleitenden Festelektrolyten **F_{K}** <111> von **K_{K}** <102> abgetrennt ist,
wobei **K_{M}** <103> und **K_{A}** <101 > durch eine Verbindung **V_{AM}** <112> miteinander verbunden sind, durch welche Flüssigkeit aus **K_{M}** <103> in **K_{A}** <101> geleitet werden kann,
wobei das Verfahren die folgenden, gleichzeitig ablaufenden Schritte (a), (b), (c) und (d) umfasst:
(a) ein Lösung **L₂** <113> umfassend den Alkohol ROH wird durch **K_{K}** <102> geleitet,
(b) eine neutrale oder alkalische, wässrige Lösung **L₃** <114> eines Salzes **S** umfassend X als Kation wird durch **K_{M},** dann über **V_{AM},** dann durch **K_{A}** <101 > geleitet,
(c) zwischen **E_{A}** <104> und **E_{K}** <105> wird Spannung angelegt,
(d) ein Gas **I** <121> wird über den Gaseinlass **G_{E}** <122> in die Lösung **L₃** <114> in der Mittelkammer **K_{M}** <103> geleitet, und über den Gasauslass **G_{A}** <120> aus der Mittelkammer **K_{M}** <103> abgeführt,
wodurch am Ablauf **A_{KK}** <109> die Lösung **L₁** <115> erhalten wird, wobei die Konzentration von XOR in **L₁** <115> höher ist als in **L₂** <113>,
und wodurch am Ablauf **A_{KA}** <106> eine wässrige Lösung **L₄** <116> von **S** erhalten wird, wobei die Konzentration von **S** in **L₄** <116> geringer ist als in **L₃** <114>,
wobei X ein Alkalimetallkation ist und Rein Alkylrest mit 1 bis 4 Kohlenstoffatomen ist.

2. Verfahren nach Anspruch 1, wobei X aus der Gruppe bestehend aus Li⁺, Na⁺, K⁺ ausgewählt ist.

3. Verfahren nach Anspruch 1 oder 2, wobei **S** ein Halogenid, Sulfat, Sulfit, Nitrat, Hydrogencarbonat oder Carbonat von X ist.

4. Verfahren nach einem der Ansprüche 1 bis 3, wobei R aus der Gruppe bestehend aus Methyl, Ethyl ausgewählt ist.

5. Verfahren nach einem der Ansprüche 1 bis 4, wobei **I** mindestens ein Gas ausgewählt aus der Gruppe bestehend aus Stickstoff, Edelgase, Sauerstoff umfasst.

6. Verfahren nach einem der Ansprüche 1 bis 5, wobei die Diffusionsbarriere **D** <110> aus der Gruppe bestehend aus kationenleitenden, anionenleitenden Membranen ausgewählt ist.

7. Verfahren nach einem der Ansprüche 1 bis 6, wobei **I** <121> mindestens teilweise entgegen der Schwerkraft in die Elektrolysezelle **E** <100> geleitet wird und mindestens teilweise entgegen der Schwerkraft aus dieser abgeführt wird.

8. Verfahren nach einem der Ansprüche 1 bis 7, wobei die Verbindung **V_{AM}** <112> innerhalb und/oder außerhalb der Elektrolysezelle **E** <100> ausgebildet ist.

9. Verfahren nach einem der Ansprüche 1 bis 8, wobei die Verbindung **V_{AM}** <112> zwischen Mittelkammer **K_{M}** <103> und Anodenkammer **K_{A}** <101> so angeordnet ist, dass mindestens ein Teil der wässrigen Lösung **L₃** <114> die Mittelkammer **K_{M}** <103> und die Anodenkammer **K_{A}** <101> vollständig durchströmt.

10. Verfahren nach einem der Ansprüche 1 bis 9, wobei der alkaliionenleitende Festelektrolyt **F_{K}** <111> eine Struktur der Formel M^{I}_{1+2w+x-y+z} M^{II}_{w} M^{III}ₓ Zr^{IV}_{2-w-x-y} M^{V}_{y} (SiO₄)_{z} (PO₄)_{3-z} aufweist,
wobei M^{I} ausgewählt aus Na⁺, Li⁺ ist,
M" ein zweiwertiges Metallkation ist,
M^{III} ein dreiwertiges Metallkation ist,
M^{V} ein fünfwertiges Metallkation ist,
die römischen Indizes I, II, III, IV, V die Oxidationszahlen angeben, in der die jeweiligen Metallkationen vorliegen,
und w, x, y, z reelle Zahlen sind, wobei gilt, dass 0 ≤ x < 2, 0 ≤ y < 2, 0 ≤ w < 2, 0 ≤ z < 3,
und wobei w, x, y, z so gewählt werden, dass 1 + 2w + x - y + z ≥ 0 und 2 - w - x - y ≥ 0 gilt.

11. Verfahren nach einem der Ansprüche 1 bis 10, wobei **L₂** <113> den Alkohol ROH und ein Alkalimetallalkoholat XOR umfasst.

12. Verfahren nach Anspruch 11, wobei das Massenverhältnis von XOR zu Alkohol ROH in **L₂** <113> im Bereich 1 : 100 bis 1 : 5 liegt.

13. Verfahren nach Anspruch 11 oder 12, wobei die Konzentration von XOR in **L₁** <115> um das 1.01 bis 2.2-fache höher ist als in **L₂** <113>.

14. Verfahren nach einem der Ansprüche 1 bis 13, wobei die Konzentration von X in **L₃** <114> im Bereich von 3.5 bis 5 mol/l liegt.

15. Verfahren nach einem der Ansprüche 1 bis 14, welches bei einer Temperatur von 20 bis 70 °C und einem Druck von 0.5 bis 1.5 bar durchgeführt wird.

## Claims

1. Process for preparing a solution **L₁** <115> of an alkali metal alkoxide XOR in the alcohol ROH in an electrolysis cell **E** <100>,
wherein **E** <100> comprises at least one anode chamber **K_{A}** <101>, at least one cathode chamber **K_{K}** <102> and at least one interposed middle chamber **K_{M}** <103>,
wherein **K_{A}** <101> comprises an anodic electrode **E_{A}** <104> and a drain **A_{KA}** <106>,
wherein **K_{K}** <102> comprises a cathodic electrode **E_{K}** <105>, a feed **Z_{KK}** <107> and a drain **A_{KK}** <109>,
wherein **K_{M}** <103> comprises a feed **Z_{KM}** <108>, a gas inlet **G_{E}** <122> and a gas outlet **G_{A}** <120>, is separated from **K_{A}** <101> by a diffusion barrier **D** <110> and is separated from **K_{K}** <102> by an alkali metal cation-conducting solid-state electrolyte **F_{K}** <111>,
wherein **K_{M}** <103> and **K_{A}** <101> are connected to one another by a connection **V_{AM}** <112> through which liquid can be routed from **K_{M}** <103> into **K_{A}** <101>,
wherein the process comprises the following steps (a), (b), (c) and (d) that proceed simultaneously:
(a) a solution **L₂** <113> comprising the alcohol ROH is routed through **K_{K}** <102>,
(b) a neutral or alkaline, aqueous solution **L₃** <114> of a salt **S** comprising X as cation is routed through **K_{M},** then via **V_{AM},** then through **K_{A}** <101>,
(c) voltage is applied between **E_{A}** <104> and **E_{K}** <105>,
(d) a gas **I** <121> is routed via the gas inlet **G_{E}** <122> into the solution **L₃** <114> in the middle chamber **K_{M}** <103>, and removed via the gas outlet **G_{A}** <120> from the middle chamber **K_{M}** <103>,
which affords the solution **L₁** <115> at the drain **A_{KK}** <109>, with a higher concentration of XOR in **L₁** <115> than in **L₂** <113>,
and which affords an aqueous solution **L₄** <116> of **S** at the drain **A_{KA}** <106>, with a lower concentration of **S** in **L₄** <116> than in **L₃** <114>,
wherein X is an alkali metal cation and R is an alkyl radical having 1 to 4 carbon atoms.

2. Process according to Claim 1, wherein X is selected from the group consisting of Li⁺, Na⁺, K⁺.

3. Process according to Claim 1 or 2, wherein **S** is a halide, sulfate, sulfite, nitrate, hydrogencarbonate or carbonate of X.

4. Process according to any of Claims 1 to 3, wherein R is selected from the group consisting of methyl and ethyl.

5. Process according to any of Claims 1 to 4, wherein **I** comprises at least one gas selected from the group consisting of nitrogen, noble gases, oxygen.

6. Process according to any of Claims 1 to 5, wherein the diffusion barrier **D** <110> is selected from the group consisting of cation-conducting and anion-conducting membranes.

7. Process according to any of Claims 1 to 6, wherein **I** <121> is routed into the electrolysis cell **E** <100> at least partly counter to gravity and is removed therefrom at least partly counter to gravity.

8. Process according to any of Claims 1 to 7, wherein the connection **V_{AM}** <112> is formed within and/or outside the electrolysis cell **E** <100>.

9. Process according to any of Claims 1 to 8, wherein the connection **V_{AM}** <112> between middle chamber **K_{M}** <103> and anode chamber **K_{A}** <101> is arranged in such a way that at least a portion of the aqueous solution **L₃** <114> flows completely through the middle chamber **K_{M}** <103> and the anode chamber **K_{A}** <101>.

10. Process according to any of Claims 1 to 9, wherein the alkali metal ion-conducting solid-state electrolyte **F_{K}** <111> has a structure of the formula M^{I}_{1+2w+x-y+z} M^{II}_{w} M^{III}ₓ Zr^{IV}_{2-w-x-y} M^{V}_{y} (SiO₄)_{z} (PO₄)_{3-z},
where M^{I} is selected from Na⁺ and Li⁺,
M^{II} is a divalent metal cation,
M^{III} is a trivalent metal cation,
M^{V} is a pentavalent metal cation,
the Roman indices I, II, III, IV, V indicate the oxidation numbers in which the respective metal cations exist,
and w, x, y, z are real numbers, where 0 ≤ x < 2, 0 ≤ y < 2, 0 ≤ w < 2, 0 ≤ z < 3,
and where w, x, y, z are chosen such that 1 + 2w + x - y + z ≥ 0 and 2 - w - x - y ≥ 0.

11. Process according to any of Claims 1 to 10, wherein **L₂** <113> comprises the alcohol ROH and an alkali metal alkoxide XOR.

12. Process according to Claim 11, wherein the mass ratio of XOR to alcohol ROH in **L₂** <113> is in the range from 1:100 to 1:5.

13. Process according to Claim 11 or 12, wherein the concentration of XOR in **L₁** <115> is 1.01 to 2.2 times higher than in **L₂** <113>.

14. Process according to any of Claims 1 to 13, wherein the concentration of X in **L₃** <114> is in the range from 3.5 to 5 mol/l.

15. Process according to any of Claims 1 to 14, which is performed at a temperature of 20 to 70°C and a pressure of 0.5 to 1.5 bar.

## Revendications

1. Procédé de préparation d'une solution **L₁** <115> d'un alcoolate de métal alcalin XOR dans un alcool ROH dans une cellule d'électrolyse **E** <100>,
**E** <100> comprenant au moins un compartiment anodique **K_{A}** <101>, au moins un compartiment cathodique **K_{K}** <102> et au moins un compartiment central **K_{M}** <103> se situant entre ceux-ci,
**K_{A}** <101> comprenant une électrode anodique **E_{A}** <104> et une évacuation **A_{KA}** <106>,
**K_{K}** <102> comprenant une électrode cathodique **E_{K}** <105>, une alimentation **Z_{KK}** <107> et une évacuation **A_{KK}** <109>,
**K_{M}** <103> comprenant une alimentation **Z_{KM}** <108>, une entrée de gaz **G_{E}** <122> et une sortie de gaz **G_{A}** <120>, étant séparé de **K_{A}** <101> par une barrière de diffusion **D** <110> et étant séparé de **K_{K}** <102> par un électrolyte solide conducteur de cations alcalins **F_{K}** <111>,
**K_{M}** <103> et **K_{A}** <101> étant reliés entre eux par une liaison **V_{AM}** <112>, par laquelle un liquide peut être conduit de **K_{M}** <103> dans **K_{A}** <101>,
le procédé comprenant les étapes suivantes, qui se produisent simultanément (a), (b), (c) et (d) :
(a) une solution **L₂** <113> comprenant l'alcool ROH est conduite à travers **K_{K}** <102>,
(b) une solution aqueuse, neutre ou alcaline **L₃** <114> d'un sel **S** comprenant X en tant que cation est conduite à travers **K_{M},** ensuite par **V_{AM},** puis à travers **K_{A}** <101>,
(c) une tension est appliquée entre **E_{A}** <104> et **E_{K}** <105>,
(d) un gaz **I** <121> est conduit par l'entrée de gaz **G_{E}** <122> dans la solution **L₃** <114> dans le compartiment central **K_{M}** <103>, et évacué par la sortie de gaz **G_{A}** <120> depuis le compartiment central **K_{M}** <103>,
ce par quoi, au niveau de l'évacuation **A_{KK}** <109>, la solution **L₁** <115> est obtenue, la concentration de XOR dans **L₁** <115> étant plus élevée que dans **L₂** <113>,
et ce par quoi au niveau de l'évacuation **A_{KA}** <106> une solution aqueuse **L₄** <116> de **S** est obtenue, la concentration de S dans **L₄** <116> étant plus petite que dans **L₃** <114>,
X étant un cation de métal alcalin et R étant un radical alkyle comportant 1 à 4 atomes de carbone.

2. Procédé selon la revendication 1, X étant choisi dans le groupe constitué par Li⁺, Na⁺, K⁺.

3. Procédé selon la revendication 1 ou 2, **S** étant un halogénure, un sulfate, un sulfite, un nitrate, un hydrogénocarbonate ou un carbonate de X.

4. Procédé selon l'une quelconque des revendications 1 à 3, R étant choisi dans le groupe constitué par méthyle, éthyle.

5. Procédé selon l'une quelconque des revendications 1 à 4, **I** comprenant au moins un gaz choisi dans le groupe constitué par l'azote, les gaz nobles, l'oxygène.

6. Procédé selon l'une quelconque des revendications 1 à 5, la barrière de diffusion **D** <110> étant choisie dans le groupe constitué par des membranes conductrices de cations, conductrices d'anions.

7. Procédé selon l'une quelconque des revendications 1 à 6, **I** <121> étant conduit dans la cellule d'électrolyse **E** <100> au moins partiellement contre la force de gravité et étant évacué de celle-ci au moins partiellement contre la force de gravité.

8. Procédé selon l'une quelconque des revendications 1 à 7, la liaison **V_{AM}** <112> étant formée à l'intérieur et/ou à l'extérieur de la cellule d'électrolyse **E** <100>.

9. Procédé selon l'une quelconque des revendications 1 à 8, la liaison **V_{AM}** <112> étant agencée entre le compartiment central **K_{M}** <103> et le compartiment anodique **K_{A}** <101> de telle manière qu'au moins une partie de la solution aqueuse **L₃** <114> traverse totalement le compartiment central **K_{M}** <103> et le compartiment anodique **K_{A}** <101>.

10. Procédé selon l'une quelconque des revendications 1 à 9, l'électrolyte solide conducteur d'ions alcalins **F_{K}** <111> présentant une structure de formule M^{I}_{1+2w+x-y+z} M^{II}_{w}M^{III}ₓZr^{IV}_{2-w-x-y}M^{V}_{y} (SiO₄)_{z} (PO₄)_{3-z},
M' étant choisi parmi Na⁺, Li⁺,
M^{II} étant un cation métallique divalent,
M^{III} étant un cation métallique trivalent,
M^{V} étant un cation métallique pentavalent,
les indices en chiffres romains I, II, III, IV, V indiquant les états d'oxydation dans lesquels les cations métalliques respectifs se trouvent,
et w, x, y, z étant des nombres réels, où 0 ≤ x < 2, 0 ≤ y < 2, 0 ≤ w < 2, 0 ≤ z < 3,
et w, x, y, z étant choisis de telle manière que l'on ait 1 + 2w + x - y + z ≥ 0 et 2 - w - x - y ≥ 0.

11. Procédé selon l'une quelconque des revendications 1 à 10, **L₂** <113> comprenant l'alcool ROH et un alcoolate de métal alcalin XOR.

12. Procédé selon la revendication 11, le rapport massique de XOR sur l'alcool ROH dans **L₂** <113> se situant dans la plage de 1 : 100 à 1 : 5.

13. Procédé selon la revendication 11 ou 12, la concentration de XOR dans **L₁** <115> étant 1,01 à 2,2 fois plus élevée que dans **L₂** <113>.

14. Procédé selon l'une quelconque des revendications 1 à 13, la concentration de X dans **L₃** <114> se situant dans la plage de 3,5 à 5 mol/l.

15. Procédé selon l'une quelconque des revendications 1 à 14, qui est réalisé à une température de 20 à 70 °C et à une pression de 0,5 à 1,5 bars.
